(19) Europäisches Patentamt
European Patent Office
Office européen des brevets

(11) **EP 1 770 521 B1**

(12) **EUROPÄISCHE PATENTSCHRIFT**

(45) Veröffentlichungstag und Bekanntmachung des Hinweises auf die Patenterteilung:
**23.06.2010 Patentblatt 2010/25**

(51) Int Cl.:
*G06F 9/52* *(2006.01)*   *G06F 9/50* *(2006.01)*

(21) Anmeldenummer: **06015962.1**

(22) Anmeldetag: **01.08.2006**

(54) **Multi-Prozessor-Architektur und Verfahren zum Steuern von Speicherzugriff bei einer Multi-Prozessor-Architektur**

Multiprocessor architecture and method for controlling memory access in a multiprocessor architecture

Architecture multi-processeurs et procédé pour commander les accès mémoire dans une architecture multi-processeurs

(84) Benannte Vertragsstaaten:
**DE FR GB IT NL**

(30) Priorität: **12.08.2005 DE 102005038567**

(43) Veröffentlichungstag der Anmeldung:
**04.04.2007 Patentblatt 2007/14**

(73) Patentinhaber: **Micronas GmbH**
**79108 Freiburg (DE)**

(72) Erfinder:
• **Vierthaler, Matthias**
**79211 Denzlingen (DE)**

• **Noeske, Carsten**
**79350 Sexau (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
EP-A- 0 249 720   EP-A- 0 372 578
EP-A- 1 132 818   US-A- 4 484 273
US-A1- 2005 080 999   US-B1- 6 314 505

EP 1 770 521 B1

# EP 1 770 521 B1

**Beschreibung**

Multi-Prozessor-Architektur und Verfahren zum Steuern von Speicherzugriff bei einer Multi-Prozessor-Architektur

Die Erfindung bezieht sich auf ein Verfahren zum Steuern von Speicherzugriff bei einer Multi-Prozessor-Architektur gemäß den oberbegrifflichen Merkmalen des Patentanspruchs 1 bzw. auf eine Multi-Prozessor-Architektur gemäß den oberbegrifflichen Merkmalen des Patentanspruchs 11.

Allgemein bekannt sind Multi-Prozessor-Architekturen mit einer Vielzahl von Prozessoren, zumindest einem ersten und einem zweiten solcher Prozessoren und mit einem Speicherbereich, auf den diese Prozessoren gemeinsam Zugriff haben. Eine Logik lässt zu einem Zeitpunkt immer nur für maximal einen dieser Prozessoren den Zugriff auf diesen Speicherbereich zu. Die derartige Steuerung von Speicher-Zugriffszeitpunkten auf den Speicherbereich kann dabei mittels entsprechend programmierter bzw. ausgestalteter Hardware-Architektur umgesetzt werden.

EP-A-0 249 720 offenbart eine Anordnung, bei der sich zwei Prozessoren einen Speicher teilen, wobei Speicherzugriffe über externe Hardware geregelt werden.

Allgemein soll die Rechenleistung eines Systems, welches auf diskreten Komponenten aufgebaut oder durch eine integrierte Schaltung realisiert ist, stetig erhöht werden. Dazu können die Prozessoren in dem System verbessert oder mit höheren Taktraten betrieben werden. Möglich ist auch, die Anzahl der Prozessoren bzw. Prozessorkerne zu erhöhen. Da eine Leistungssteigerung des einzelnen Prozessorkerns nicht immer möglich ist, werden immer häufiger mehrere Prozessoren bzw. Prozessorkerne in einem System platziert, welche die geforderten Rechenschritte parallel zueinander abarbeiten können.

Problematisch bei solchen Anordnungen ist, dass zwischen den einzelnen Prozessoren eine Schnittstelle benötigt wird, über welche die Prozessoren Daten austauschen können. Als Schnittstelle bevorzugt wird dazu ein Speicher mit einem Speicherbereich, auf den sämtliche Prozessoren zugreifen können.

Bekannt ist ein sogenannter Dual-Port-RAM (RAM: Random Access Memory - Direktzugriffsspeicher), auf den von zwei Seiten gleichzeitig durch zwei Prozessoren zugegriffen werden kann. Um dies zu ermöglichen, weist ein solcher Speicher getrennte Adress- und Daten-Bussysteme sowie eine Arbitrationslogik auf, welche im Fall gleichzeitiger Schreiboperationen entsprechende Maßnahmen zur Kollisionsverhinderung einleitet. Nachteilhafterweise ist ein solches Dual-Port-RAM größer als ein normales RAM, so dass ein größerer Flächenanteil benötigt wird. Außerdem muss die aufwändige Arbitrationslogik ein gleichzeitiges Schreiben auf die gleiche RAM-Zelle, d. h. auf den gleichen Speicherbereich zu ein- und demselben Zeitpunkt von beiden Prozessoren verhindern. Üblicherweise wird durch die Arbitrationslogik im Konfliktfall einer der beiden Prozessoren angehalten.

Bekannt ist auch der Einsatz einer separaten Arbitrationslogik in Verbindung mit einem RAM, welches in kleinere Blöcke aus individuellen Speicherbereichen unterteilt wird. Falls mehrer Prozessoren gleichzeitig auf den gleichen Block zugreifen wollen, bekommt nur einer dieser Prozessoren die Schreib-/Leseerlaubnis. Die anderen Prozessoren werden angehalten. Dies erfordert eine aufwändige Logik in den Prozessorkernen und der Ansteuerung der RAMs.

Unter RISC (Reduced Instruction Set Computing) ist ein Computersystem mit reduziertem Befehlssatz bekannt. Bei Computern mit einer entsprechenden Prozessorarchitektur führt jeder einzelne Befehl nur relativ einfache Operationen aus. Bei einer solchen Prozessor-Architektur ist jedem einzelnen der Prozessoren ein individuelles Prozessor-Programm bzw. ein individueller Programmablauf zugeordnet. Jeder dieser Programmabläufe steuert mit entsprechenden Befehlen die Verarbeitung von Daten sowie von Speicherzugriffen auf einen dem Prozessor individuell zugeordneten Speicherbereich und auch auf von mehreren Prozessoren gemeinsam genutzte Speicherbereiche. In dem Programmablauf können auch Sprünge vorgesehen werden, welche den Verarbeitungsablauf des zugeordneten Prozessors von einer Programmadresse zu einer anderen Programmadresse innerhalb des Programmablaufs versetzen.

Die Aufgabe der Erfindung besteht darin, eine Multi-Prozessor-Architektur bzw. ein Verfahren zum Betreiben einer solchen Multi-Prozessor-Architektur hinsichtlich des Steuerns von Speicherzugriffen zu verbessern.

Diese Aufgabe wird durch ein Verfahren zum Steuern von Speicherzugriffen für einen Prozessor einer Vielzahl von Prozessoren einer Multi-Prozessor-Architektur mit den Merkmalen des Patentanspruchs 1 bzw. durch eine Multi-Prozessor-Architektur mit den Merkmalen des Patentanspruchs 11 gelöst. Vorteilhafte Ausgestaltungen sind Gegenstand von abhängigen Ansprüchen.

Bevorzugt wird demgemäss ein Verfahren zum Steuern von Speicherzugriffen einer Vielzahl von Prozessoren, insbesondere von zumindest einem ersten und einem zweiten Prozessor einer Multi-Prozessor-Architektur auf einen Speicherbereich, bei dem zu einem Zeitpunkt immer nur maximal einem dieser Prozessoren der Zugriff auf den Speicherbereich zugelassen wird, wobei jedem der Prozessoren mittels eines dem jeweiligen Prozessor (0, 1; 0 - 4) individuell zugeordneten Prozessorprogramms (p0, p1; p0 - p3) Zeitpunkte für Zugriffe auf den Speicherbereich zyklisch eindeutig zugeordnet werden.

Bevorzugt wird insbesondere ein Verfahren, bei dem ein Prozessorprogramm für einen der Prozessoren Speicherzugriffe an zyklisch eindeutig zugeordneten Programmadressen bereitstellt.

Bevorzugt wird insbesondere ein Verfahren, bei dem das Prozessorprogramm für einen der Prozessoren Spei-

2

cherzugriffe auf den Speicherbereich an zyklisch eindeutig zugeordneten Programmadressen vorsieht, welche gegenüber den Programmadressen für Speicherzugriffe eines anderen Prozessorprogramms eines anderen der Prozessoren um einen relativ zu einer Zyklusdauer versetzten Wert bereitgestellt sind.

Bevorzugt wird insbesondere ein Verfahren, bei dem Speicherzugriffe eines o-ten der Prozessoren zu Zeitpunkten und/oder an Prozessorprogramm-Programmadressen ad erfolgen gemäß

$$ad \bmod m = o$$

mit m als einem Wert gleich oder größer der Anzahl der Prozessoren, welche zyklisch eindeutig auf den Speicherbereich zu greifen.

Bevorzugt wird insbesondere ein Verfahren, bei dem die Prozessorprogramme der Prozessoren zeitlich versetzt zueinander laufen und Speicherzugriffe innerhalb der Prozessorprogramme an relativ zu anderen Prozessorprogrammen eines anderen Prozessors zyklisch gleichen Programmadressen eingesetzt werden.

Bevorzugt wird insbesondere ein Verfahren, bei dem die Prozessorprogramme der Prozessoren zeitlich gleichzeitig zueinander laufen und Speicherzugriffe innerhalb der Prozessorprogramme an relativ zu anderen Prozessorprogrammen eines anderen Prozessors zyklisch gleichen Programmadressen eingesetzt werden.

Bevorzugt wird insbesondere ein Verfahren, bei dem in einem der Prozessorprogramme zumindest für einen der Prozessoren ein Programmsprung von einer momentanen Programmadresse ad zu einer nachfolgenden Programmadresse $ad_{neu}$ eingesetzt wird gemäß der zyklischen Zuordnung für diesen Prozessor. Bevorzugt wird dabei ein Verfahren, bei dem ein Programmsprung eingesetzt ist gemäß

$$(ad_{neu} - 1) \bmod m = ad \bmod m$$

mit m als Wert gleich oder größer der Anzahl der Prozessoren.

Bevorzugt wird insbesondere ein Verfahren, bei dem Speicherzugriffe und/oder Programmsprünge innerhalb eines der Prozessorprogramme einem oder mehreren letzten Adressbit einer entsprechenden Programmadresse des entsprechenden Prozessors unter Berücksichtigung der zyklischen Zuordnung zugeordnet sind.

Bevorzugt wird insbesondere ein Verfahren, bei dem die Prozessorprogramme für die verschiedenen der Prozessoren hinsichtlich der Zeitpunkte oder Programmadressen für Speicherzugriffe und/oder Programmsprünge durch eine übergeordnete Instanz oder ein übergeordnetes Verfahren aufeinander abgestimmt bereitgestellt werden. Dies wird beispielsweise durch eine entsprechende Programmierung seitens eines Programmierers und/oder durch eine geeignet eingerichtete Assemblierungs- oder Compilierungseinrichtung umgesetzt.

Bevorzugt wird demgemäss auch eine Multi-Prozessor-Architektur, insbesondere eine Multi-Prozessor-Architektur zum Durchführen eines solchen Verfahrens, mit einer Vielzahl von Prozessoren zumindest einem ersten und einem zweiten Prozessor, mit einem Speicherbereich, auf den diese Prozessoren Zugriff haben, und mit einer Logik, welche zu einem Zeitpunkt immer nur für maximal einen der Prozessoren den Zugriff auf den Speicherbereich zulässt, wobei die Prozessoren und/oder Programmabläufe der Prozessoren derart ausgestaltet sind, dass für jeden der Prozessoren mittels eines dem jeweiligen Prozessor individuell zugeordneten Prozessorprogramms nur zu für diesen Prozessor zyklisch eindeutig zugeordneten Zeitpunkten und innerhalb des Zyklus zeitlich versetzt zu den anderen Prozessoren der Zugriff auf den Speicherbereich zugelassen ist.

Bevorzugt wird insbesondere eine Multi-Prozessor-Architektur, bei welcher die Logik durch die Prozessorprogramme ausgebildet ist und/oder individuell für die einzelnen der Prozessoren ansteuerbar ist.

Bevorzugt wird insbesondere eine Multi-Prozessor-Architektur, bei welcher die Logik Zeitpunkte für Speicherzugriffe auf den Speicherbereich und/oder Sprünge innerhalb des jeweiligen Prozessorprogramms zyklisch abhängig von dem oder den letzten Bit einer Programmadresse des Prozessorprogramms verknüpft.

Durch die Multi-Prozessor-Architektur bzw. das Verfahren zum Steuern von Speicherzugriffszeitpunkten und/oder von Programmsprüngen innerhalb einer solchen Multi-Prozessor-Architektur wird das Problem des gemeinsamen Speicherzugriffs auf einen Speicherbereich durch eine Vielzahl von Prozessoren nicht mehr zwingend von Hardware sondern besonders bevorzugt von Software gelöst. Die Programmabläufe bzw. Prozessorprogramme der einzelnen Prozessoren werden derart aufgebaut und/oder angesteuert, dass eine aufwändige Arbitrierungslogik entbehrlich ist. Dies lässt Fläche und Rechenleistung einsparen.

Vorteilhafterweise können die entsprechenden Programmabläufe bei deren Programmierung geeignet aufgebaut und von einem Compiler und/oder Assembler umgesetzt werden. Die Programmabläufe versetzen sämtliche Prozessoren, welcher auf einen gemeinsamen Speicherbereich zugreifen können, innerhalb des Systems in einen klar definierten Zustand zueinander.

Eine zyklisch eindeutige Zuordnung zulässiger Zeitpunkte für den Zugriff auf den Speicherbereich ist insbesondere durch Einsatz der Modulus-Funktion bei der Erstellung der Programmabläufe vorteilhaft umsetzbar. In einem solchen System können vorteilhafterweise die letzten Bit der Programmadressen der jeweiligen Prozessoren unabhängig vom Programmablauf eine zyklisch eindeutige Beabstandung, in einfachen Fällen z. B. eine konstante Differenz, zueinander aufweisen. Alternativ besteht auch die Möglichkeit, einen separaten Zähler mitlaufen zu lassen, wobei die Zählerwerte letztendlich in einem festen Verhältnis zu den letzten Bit der Programmadressen stehen. Mittels einer vorrichtungsgemäß oder verfahrensgemäß umgesetzten Logikschaltung können dann die letzten Bit der Adresse ausgewertete werden und dann entsprechend davon abhängig der Speicherbereich oder Speicher mit einem eindeutig zugeordneten der Prozessoren verbunden werden, so dass der Zugriff auf den Speicher oder einen Teil des Speichers immer nur einem der Prozessoren erlaubt ist. Die Software in Form der Programmabläufe stellt sicher, dass ein Prozessor nur auf den Speicher bzw. Speicherbereich zugreift, wenn er gemäß den entsprechenden Adressbit seines Programmablaufs auch von der Logikschaltung her die Zugriffsberechtigung hat.

Die Anzahl der Bit der Programmadresse, welche zur Speicherzugriffssteuerung verwendet wird, hängt insbesondere von der Anzahl von Prozessoren ab, welche den Speicherbereich gemeinsam nutzen können. Im Falle zweier Prozessoren ist lediglich die Berücksichtigung des letzten Bit der Programmadressen dieser beiden Prozessoren erforderlich. Im Fall von 4 Prozessoren werden die beiden letzten Bit verwendet. Bei einer noch größeren Anzahl von Prozessoren wird die Anzahl der verwendeten Bit der entsprechenden Programmadressen entsprechend erhöht.

Um im Fall von Sprüngen innerhalb eines der Programmabläufe von einer momentanen Programmadresse auf eine nicht direkt nachfolgende Programmadresse sondern auf eine zurückliegende oder auf eine weiter vorne liegende Programmadresse die Steuerung von geeigneten Speicherzugriffszeitpunkten für einen dieser Prozessoren sicherzustellen, wird allen Prozessoren des Systems vorteilhafterweise nur erlaubt, Sprünge unter Berücksichtigung des zyklischen Abstands der zugelassenen Speicherzugriffszeitpunkte durchzuführen. Im Fall eines einfachen Systems mit nur zwei Prozessoren darf von einer geraden Programmadresse entsprechend nur auf eine ungerade Programmadresse gesprungen werden und von einer ungeraden Programmadresse nur auf eine gerade Programmadresse gesprungen werden. Die Umsetzung kann beispielsweise durch Hardware oder direkt durch die Software bzw. den Compiler sichergestellt werden.

Vorteilhafterweise wird sichergestellt, dass sämtliche Prozessoren zu einem bestimmten Zeitpunkt innerhalb von deren individuellen Programmabläufen jeweils eine bestimme Programmadresse oder eine zu dieser bestimmten Programmadresse zyklisch eindeutig zugeordneten Programmadresse abarbeiten. Beispielsweise können alle Prozessoren nach einem Reset (Zurücksetzen) gleichzeitig bei der Adresse 0 starten oder mit einer definierten Anzahl von Takten zueinander versetzt starten. Dadurch wird sichergestellt, dass alle Prozessoren stets in der zueinander zyklischen Verarbeitung von Programmschritten mit Befehlen für einen Speicherzugriff verbleiben.

Bei einer einfachen Umsetzung des Konzepts durch eine Anordnung mit zwei Prozessoren kann entsprechend durch eine einfache Logik bzw. Logikschaltung eine Konfigurierung von einem oder mehreren Speicherbereichen bzw. RAM-Blöcken derart durchgeführt werden, dass ein bestimmter der Prozessoren immer in einem geraden Takt auf den Speicherbereich zugreift, während der andere Prozessor immer in einem ungeraden Takt auf den Speicherbereich zugreift. Die Schreib- bzw. Leserechte wechseln dadurch mit jedem Prozessortakt. Die Sicherstellung, dass die beiden Prozessoren immer nur dann auf den Speicherbereich zugreifen, wenn sie sich in dem richtigen Takt befinden, kann auf einfache Art und Weise durch die Software bzw. den Compiler sichergestellt werden, welche als Programmablauf den jeweils zugeordneten der Prozessoren steuern.

Besonders vorteilhaft ist eine Umsetzung eines solchen Konzeptes möglich, wenn ein Befehl bzw. ein Instruktionswort für alle Prozessoren immer dieselbe Länge hat, wie dies in der Regel bei sogenannten RISC-Prozessoren der Fall ist.

Ein Ausführungsbeispiel wird nachfolgend anhand der Zeichnung näher erläutert. Es zeigen:

Fig. 1 schematisch eine Multi-Prozessor-Architektur mit zwei Prozessoren, welche einen gemeinsamen Speicherbereich nutzen, sowie zwei einfache beispielhafte Programmabläufe, welche den Prozessoren zugeordnet sind,

Fig. 2 eine solche Multi-Prozessor-Architektur mit zwei alternativen Programmabläufen und

Fig. 3 eine Multi-Prozessor-Architektur mit vier Prozessoren, welche auf den gleichen Speicherbereich zugreifen können, und mit vier den Prozessoren entsprechend zugeordneten Programrnabläufen.

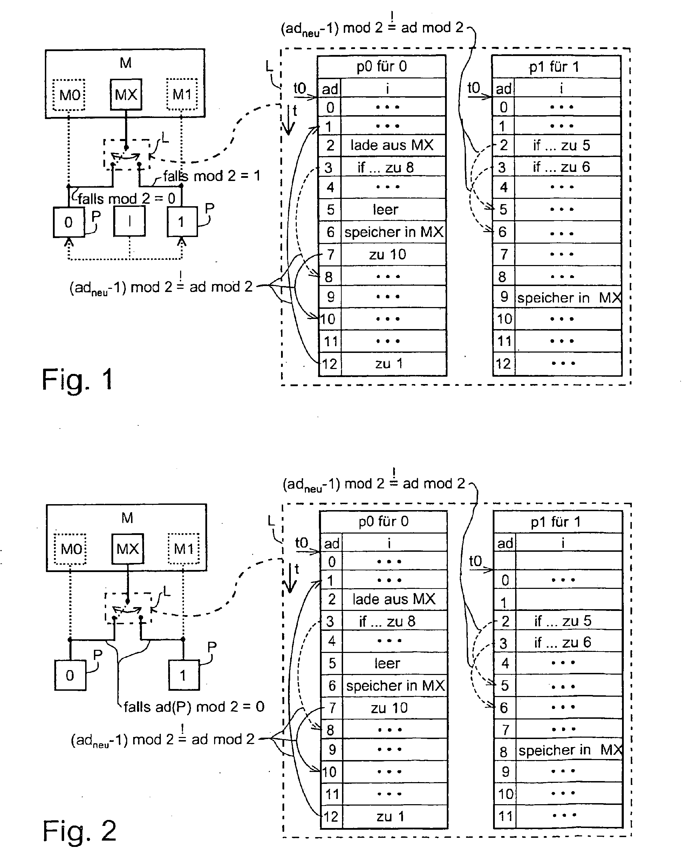

Wie aus Fig. 1 ersichtlich ist, besteht eine beispielhafte Multi-Prozessor-Architektur neben einer Vielzahl weiterer möglicher Komponenten aus Prozessoren P und mindestens einer Speichereinrichtung M, auf welche die Prozessoren P zum Schreiben und/oder Lesen von Daten zugreifen können. Bei der dargestellten Ausführungsform handelt es sich um eine sehr einfache Variante mit einem ersten und einem zweiten Prozessor 0, 1. Jedem dieser Prozessoren 0, 1 ist ein individuelles Prozessorprogramm p0, p1 zugeordnet, welches den jeweiligen der Prozessoren 0, 1 über eine Programmierschnittstelle I einprogrammiert oder bei der Prozessorfertigung direkt eingesetzt wird. Jeder der Prozessoren 0, 1 hat somit sein eigenes Prozessorprogramm p0 bzw. p1 für dessen Steuerung. Optional ist außerdem in üblicher Art und Weise jedem der Prozessoren 0, 1 ein eigener individueller Prozessor-Speicherbereich M0 bzw. M1 in der Speichereinrichtung M zuordbar.

In der Speichereinrichtung M ist ein Speicherbereich MX bereitgestellt, auf welchen beide Prozessoren 0, 1 Zugriff haben. Ein solcher Speicherbereich MX kann auch als eigenständige Speichereinrichtung ausgeführt sein. Die Steuerung des Zugriffs der Prozessoren 0, 1 auf den Speicherbereich MX erfolgt derart, dass zu einem Zeitpunkt t immer nur für maximal einen dieser Prozessoren 0, 1 der Zugriff insbesondere der Schreibzugriff auf diesen Speicherbereich MX zugelassen wird. Diese Steuerung von Speicherzugriffszeitpunkten erfolgt durch eine Logik L, welche lediglich zur bildlichen Veranschaulichung als bauliche Komponenten in Form eines Schalters skizziert ist. Gemäß besonders bevorzugter Ausführungsformen wird die Logik L durch eine reine Softwaresteuerung mittels der Prozessorprogramme p0, p1 ohne eine durch Hardware ausgeführte Schalteinrichtung umgesetzt, obgleich auch dies oder kombinierte Lösungen gemäß alternativer Ausführungsformen umsetzbar sind.

Die Steuerung der Speicherzugriffe auf den Speicherbereich MX durch die Logik L wird derart umgesetzt, dass die Prozessoren 0, 1 und/oder deren Programmabläufe derart ausgestaltet sind, dass jeder der Prozessoren 0, 1 nur zu Zeitpunkten t den Zugriff auf den Speicherbereich MX erhält, zu denen der Zugriff für den jeweiligen Prozessor zyklisch eindeutig zugeordnet ist.

Zur Koordinierung der Prozessoren 0, 1 werden deren Prozessorprogramme p0, p1 durch ein Synchronisierungssignal t0 derart synchronisiert, dass deren Programmabläufe beide mit der gleichen Adresse, insbesondere der Programmadresse 0 beginnen. Die Programmabläufe schreiten mit jedem Takt um einen Programmschritt fort, sofern nicht Programmsprünge innerhalb eines der Programmabläufe vorgesehen sind. Zum Steuern des zyklisch eindeutigen Zugriffs der Prozessoren 0, 1 auf den Speicherbereich MX ist festgelegt, dass der erste Prozessor 0 nur bei geraden Programmadressen 0, 2, 4, 6, 8, ... auf den Speicherbereich MX zugreifen darf. Mathematisch beschreibbar ist dies durch die Modulus-Funktion mod 2 = 0. Der zweite Prozessor 1 darf entsprechend nur bei ungeraden Programmadressen 1, 3, 5, 7, 9, ... Auf den Speicherbereich MX zugreifen, was durch die Modulus-Funktion mod 2 = 1 beschreibbar ist. Durch eine solche Festlegung der Prozessorprogramme p0, p1 bzw. von deren Programmabläufen wird eine einfache Logik bzw. Logikschaltung bereitgestellt, welche eine Kollision von Zugriffen auf den Speicherbereich MX durch die beiden Prozessoren 0, 1 verhindert.

Bei den dargestellten beispielhaften Programmabläufen greift beispielsweise der erste Prozessor 0 bei einer sechsten Programmadresse ad = 6 zum Speichern von Daten auf den Speicherbereich MX zu, während der zweite Prozessor 1 bei dem Programmschritt seiner neunten Programmadresse ad = 9 zum Speichern auf den Speicherbereich MX zugreift. Außerdem greift der erste Prozessor 0 bei seinem beispielhaften zweiten Programmschritt, d. h. bei der Anweisung gemäß der zweiten Programmadresse ad = 2 zum Laden von Daten aus dem Speicherbereich MX auf dem Speicherbereich MX zu.

Bei der Programmierung oder gegebenenfalls beim Assemblieren oder Kompilieren der beiden Prozessorprogramme p0 und p1 wird entsprechend sichergestellt, dass die beiden Prozessoren 0, 1 bzw. deren zugeordnete Prozessorprogramme p0, p1 nur zu zyklisch eindeutig zugeordneten Zeitpunkten t bzw. zyklisch eindeutig zugeordneten Programmadressen ad auf den Speicherbereich MX zugreifen.

Um dies im Fall von Programmabläufen mit Programmsprüngen innerhalb des Prozessorprogramms p0, p1 sicherzustellen, wird für solche Programmsprünge festgelegt, dass diese unter Berücksichtigung eindeutig zugeordneter Zeitpunkte bzw. Programmadressen ad durchzuführen sind. Im Fall der Anordnung mit zwei Prozessoren 0, 1 lässt sich dies beschreiben durch

$$(ad_{neu} - 1) \bmod 2 = ad \bmod 2$$

mit $ad_{neu}$ als der anzuspringenden Programmadresse und ad als der momentanen Programmadresse.

In dem Prozessorprogramm p0 des ersten Prozessors 0 ist beispielsweise ein optionaler Sprung von dem dritten Programmschritt bzw. der dritten Programmadresse ad zur achten Programmadresse vorgesehen. Anstelle von der dritten Programmadresse ad = 3 zur vierten Programmadresse ad = 4, d. h. zu einer direkt nachfolgenden geraden Programmadresse ad schreitet der Progammflu ablauf zu einer anderen geraden Programmadresse ad, nämlich der achten Programmadresse ad = 8 fort. Ein weiterer beispielhafter Programmsprung ist von der sieben Programmadresse ad = 7 zu der zehnten Programmadresse ad = 10 dargestellt. Wird ein Programmsprung von einer geraden Programmadresse ad ausgehend durchgeführt, so muss der Sprung entsprechend zu einer ungeraden Programmadresse ad erfolgen, wie beispielsweise von der zwölften Programmadresse ad = 12 zu der ersten Programmadresse ad = 1.

Entsprechend sind auch in dem Prozessorprogramm p1 des zweiten Prozessors 1 Sprünge zwischen Programmadressen ad skizziert, wobei ebenfalls von geraden Programmadressen ad zu ungeraden Programmadressen ad und von ungeraden Programmadressen ad zu geraden Programmadressen ad gesprungen wird.

Somit werden sich die beiden Prozessoren 0, 1 ab dem Synchronisierungszeitpunkt immer entweder auf einer geraden oder auf einer ungeraden Programmadressen ad befinden, und zwar auch, wenn in dem Programmablauf Programmsprünge vorgesehen sind. Für Speicherzugriffe kann daher beim Programmieren der Programmabläufe mit den Bedingungen für zyklische Zugriffsrechte auf den Speicherbereich MX und mit den zusätzlichen Bedingungen für eventuelle Programmsprünge ohne eine aufwändige Arbitrationslogik und insbesondere ohne das vollständige Anhalten der Prozessoren ein kollisionsfreier Speicherzugriff auf den Speicherbereich MX sichergestellt werden. Gegebenenfalls werden dazu einfach Leerschritte in den Programmablauf eingearbeitet, wie beispielsweise bei der fünften Programmadresse ad = 5 des ersten Prozessors 0, falls eine Speicherzugriff anderenfalls auf einen unzulässigen Zugriffszeitpunkt fallen würde.

Fig. 2 zeigte eine alternative oder gegebenenfalls auch kombinierbare Ausführungsform, bei welcher die beiden Prozessoren 0, 1 zu versetzten Zeitpunkten mittels des Synchronisierungssignals t0 gestartet und/oder synchronisiert werden. Beispielsweise sind die beiden Programmabläufe derart versetzt, dass auf eine gerade Programmadresse ad des Prozessorprogramms p0 des ersten Prozessors 0 zeitgleich eine ungerade Programmadresse ad des Prozessorprogramms p1 des zweiten Prozessors 1 fällt. Bei dieser Ausführungsform werden die Programmabläufe derart gestaltet, dass beide Prozessoren 0, 1 jeweils dann auf den Speicherbereich MX zugreifen dürfen, wenn sich der Programmablauf der Prozessorprogramme p0, p1 auf einer geraden Programmadresse ad befindet. Beispielhaft finden Speicherzugriffe bei der zweiten und sechsten Programmadresse ad = 2 bzw. ad = 6 des Prozessorprogramms p0 des ersten Prozessors 0 bzw. bei der achten Programmadresse ad = 8 des Prozessorprogramms p1 des zweiten Prozessors 1 statt. Der Programmierer, Assembler oder Kompilierer stellt bei diesem Ausführungsbeispiel sicher, das ein Zugriff auf den Speicherbereich MX immer nur bei einer geraden oder alternativ immer nur bei einer ungeraden Programmadresse ad stattfindet, da sich die beiden Prozessorprogramme p0, p1 zu einem Zeitpunkt t stets einerseits auf einer geraden und andererseits auf einer ungeraden Programmadresse ad befinden. Dies führt zu einer Erleichterung der Programmiertätigkeit und vermeidet Programmierfehler. Hinsichtlich der Programmsprünge gelten die gleichen Bedingungen wie bei der Ausführungsform gemäß Fig. 1.

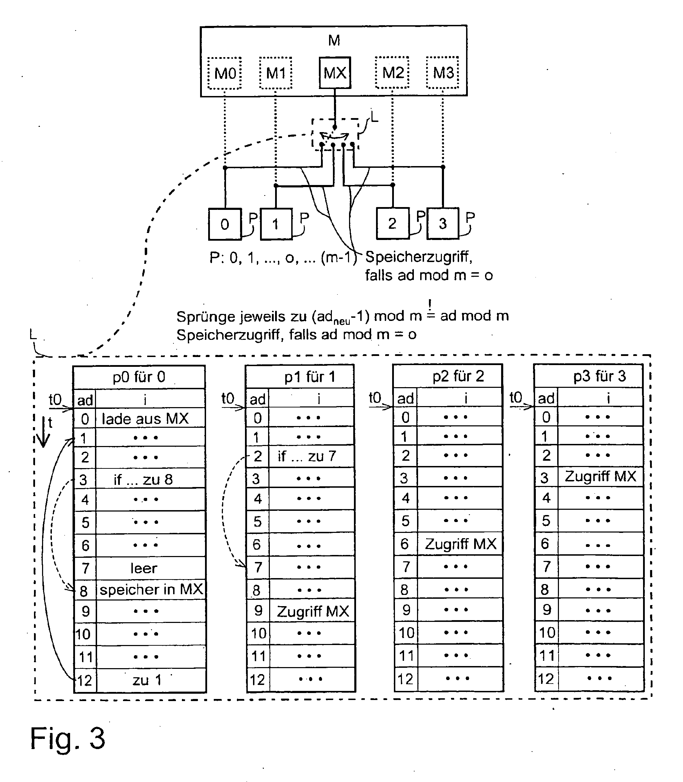

Fig. 3 zeigt eine beispielhafte Ausführungsform für eine Multi-Prozessor-Architektur mit mehr als zwei Prozessoren P, wobei bei dem dargestellten Ausführungsbeispiel beispielhaft vier Prozessoren 0, 1, 2, 3 eingesetzt sind. Wie bei dem Ausführungsbeispiel gemäß Fig. 1 ist jedem dieser Prozessoren 0 - 3 jeweils ein individuell zugeordneter Speicherabschnitt M0 - M3 oder Speicher optional zuordbar. Vorliegend von Bedeutung ist, dass die vier Prozessoren 0 - 3 alle Zugriff auf einen Speicherbereich MX, der gegebenenfalls auch durch eine eigenständige Speichereinrichtung ausgeführt ist, haben. Die Zugriffe auf den Speicherbereich M werden wiederum durch eine Logik L gesteuert, wobei die Logik L entsprechend den beiden ersten Ausführungsbeispielen vorzugsweise rein softwaretechnisch durch eine geeignete Programmierung von individuellen Prozessorprogrammen p0 - p3 der Prozessoren 0 - 3 umgesetzt wird. Bezüglich Speicherzugriffen ist ein Zyklus von zulässigen Programmadressen ad festgelegt, welcher berücksichtigt, dass eine Anzahl m von vier Prozessoren 0 - 3 auf den Speicherbereich MX zugreifen darf. Für einen o-ten der m Prozessoren 0 - 3 werden die zulässigen Programmadressen ad für Speicherzugriffe vorzugsweise mittels der Mudulus-Funktion gemäß

$$ad \bmod m = o$$

im Rahmen der Programmierung der Prozessorprogramme p0 - p3 festgelegt. Natürlich sind auch andere zyklische Zugriffszeiten möglich, beispielsweise jeweils zwei Speicherzugriffszeiten bzw. Adressen innerhalb eines Zyklus für einen bestimmten der Prozessoren P, falls diesem Aufgaben zugewiesen werden, welche häufigere Zugriffe auf den Speicherbereich MX erforderlich machen, als dies bei den übrigen Prozessoren P erforderlich ist. Bei den dargestellten beispielhaften Programmabläufen sind im Prozessorprogramm p0 des ersten Prozessors 0 Speicherzugriffe auf den Speicherbereich MX zum Laden bzw. Speichern von Daten beispielsweise bei den Programmadressen ad = 0 und ad = 8 vorgesehen. Bei den Prozessorprogrammen p1, p2, p3 für die weiteren Prozessoren 1 - 3 sind entsprechend Speicherzugriffe auf den Speicherbereich MX beispielhaft vorgesehen bei den Programmadressen ad = 9, ad = 6 bzw. ad = 3.

Auch die Berechnung zulässiger Sprünge innerhalb der Prozessorprogramme p0 - p3 wird entsprechend der erhöhten Anzahl an Prozessoren P modifiziert und ist gemäß der besonders bevorzugten Ausführungsform berechenbar mittels

$$(ad_{neu} - 1) \bmod m = ad \bmod m$$

mit $ad_{neu}$ - als der anzuspringenden Programmadresse, ad als der momentanen Programmadresse und m als der Anzahl eingesetzter Prozessoren P.

Bei dem Beispiel mit vier Prozessoren 0 - 3, welche alle zum gleichen Zeitpunkt t = 0 mittels des Synchronisierungssignals t0 synchronisiert werden, werden entsprechend Sprünge von einer der Programmadressen ad zu einer anderen Programmadresse $ad_{neu}$ gemäß der beispielhaften Ausführungsform nur von einem Adresswert x*4 auf einen anderen Adresswert x*4 + 1 durchgeführt.

Sprünge dürfen nach Abarbeitung der entsprechenden Befehle entsprechend z. B. an den Adressen 0, 3, 7, 11 und 15 stehen und auf Sprungziele 1, 5, 9 und 13 verweisen. Der erste Prozessor 0 darf bei Programmadressen ad = 0, 4, 8, 12,... auf den Speicherbereich MX bzw. auf das RAM zugreifen. Der zweite Prozessor 1 darf bei Programmadressen ad = 1, 5, 9, 13... auf den Speicherbereich MX bzw. auf das RAM zugreifen. Sprünge dürfen nach Abarbeitung der entsprechenden Befehle entsprechend z. B. an den Adressen 2, 6, 10, 14 stehen und auf Sprungziele 3, 7, 11 und 15 verweisen. Der dritte Prozessor 2 darf bei Programmadressen ad = 2, 6, 10, 14.... auf den Speicherbereich MX bzw. auf das RAM zugreifen. Sprünge dürfen nach Abarbeitung der entsprechenden Befehle entsprechend z. B. an den Adressen 0, 4, 8, 12 und 16 stehen und auf Sprungziele 1, 5, 9 und 13 verweisen. Der vierte Prozessor 3 darf bei Programmadressen ad = 3, 7, 11, 15,... auf den Speicherbereich MX bzw. auf das RAM zugreifen.

Allgemein gilt für den speziellen Fall gemäß Fig. 3 mit beispielsweise m als Zyklusdauer und zugleich als Anzahl der Prozessoren, q als nächstgrößerer Zweierpotenz von m im Falle von nur aufwärts gerichteten Sprüngen, i als ganzer Zahl mit i = 0, ..., q -1, r als ganzer Zahl größer Null und ad als der Programmadresse, dass Sprünge nur an einer Programmadresse gemäß n = r * q + i stehen dürfen und nur zu einer Adresse n + 1 führen dürfen. In diesem Fall befinden sich die Prozessoren 0 - 3 immer in einem zyklisch definierten Zustand zueinander. In einem solchen Fall kann eine einfache Logik L auf eine Speicheradresse oder einen Speicher einen Zugriff durch einen der Prozessoren zulassen, wenn ad mod q = i gilt.

Die Größe m, welche die Zyklusdauer bzw. Zykluslänge bestimmt, muss nicht zwingend an die Anzahl der tatsächlich vorhandenen Prozessoren P gebunden sein sondern kann auch einen größeren Wert aufweisen. Dies ist beispielsweise dann vorteilhaft, wenn zwischenzeitlich anderen Prozessoren oder Einrichtungen der Zugriff auf den Speicherbereich MX ermöglicht werden soll. Auch im Fall der Zuordnung einer größeren zugelassenen Anzahl zyklischer Speicherzugriffe für einen der Prozessoren P gegenüber den anderen der Prozessoren P wird die Zyklusdauer m zweckmäßigerweise entsprechend größer als die tatsächliche Anzahl der Prozessoren P angesetzt. Dies hat entsprechend Auswirkungen auf die Zugriffszeitpunkte t bzw. Programmadressen ad für Speicherzugriffe sowie auf die Bedingungen für zulässige Sprünge innerhalb der jeweiligen Prozessorprogramme p0 - p3.

Abweichend von solchen Modifikationen können auch weitere Modifikationen der beschriebenen Ausführungsbeispiele vorgenommen werden. Insbesondere können die verschiedenen einzelnen Aspekte der verschiedenen Ausführungsformen auch untereinander kombiniert werden.

**Patentansprüche**

1. Verfahren zum Steuern von Speicherzugriffen einer Vielzahl von Prozessoren (P), einer Multi-Prozessor-Architektur auf einen Speicherbereich (MX), bei dem

   - zu einem Zeitpunkt (t) immer nur maximal einem dieser Prozessoren (P; 0, 1; 0 - 3) der Zugriff auf den Speicherbereich (MX) zugelassen wird, wobei
   - jedem der Prozessoren mittels eines dem jeweiligen Prozessor (0, 1; 0 - 3) individuell zugeordneten Prozessorprogramms (p0, p1; p0 - p3) Zeitpunkte (t) für Zugriffe auf den Speicherbereich (MX) zyklisch eindeutig zugeordnet werden,

   **dadurch gekennzeichnet, dass**

   - das jeweilige Prozessorprogramm (p0 - p3) für einen entsprechenden der Prozessoren (0 - 3) Speicherzugriffe an zyklisch eindeutig zugeordneten Programmadressen (ad) bereitstellt.

2. Verfahren nach Anspruch 1, bei dem das Prozessorprogramm (p0 - p3) für einen der Prozessoren (0 - 3) Speicherzugriffe auf den Speicherbereich (MX) an zyklisch eindeutig zugeordneten Programmadressen (ad) vorsieht, welche gegenüber den Programmadressen (ad) für Speicherzugriffe eines anderen Prozessorprogramms eines anderen der Prozessoren um einen relativ zu einer Zyklusdauer (m) versetzten Wert (o) bereitgestellt sind.

3. Verfahren nach Anspruch 2, bei dem Speicherzugriffe eines o-ten der Prozessoren (P) zu Zeitpunkten (t) und/oder an Prozessorprogramm-Programmadressen ad erfolgen gemäß

$$\texttt{ad mod m = o} \qquad \texttt{oder} \qquad \texttt{t(ad mod m=0)}$$

mit m als einem Wert gleich oder größer der Anzahl der Prozessoren (P), welche zyklisch eindeutig auf den Speicherbereich (MX) zu greifen.

4. Verfahren nach Anspruch 2, bei dem die Prozessorprogramme (p0, p1) der Prozessoren (0, 1) zeitlich versetzt zueinander laufen und Speicherzugriffe innerhalb der Prozessorprogramme (p0, p1) an relativ zu anderen Prozessorprogrammen (p0) eines anderen Prozessors (o) zyklisch gleichen Programmadressen (ad) eingesetzt werden.

5. Verfahren nach einem der Ansprüche 1 bis 3, bei dem die Prozessorprogramme (p0, p1) der Prozessoren (0, 1) zeitlich gleichzeitig zueinander laufen und Speicherzugriffe innerhalb der Prozessorprogramme (p0, p1) an relativ zu anderen Prozessorprogrammen (p0) eines anderen Prozessors (o) zyklisch gleichen Programmadressen (ad) eingesetzt werden.

6. Verfahren nach einem vorstehenden Anspruch, bei dem in einem der Prozessorprogramme (p0) zumindest für einen der Prozessoren (0 - 3) ein Programmsprung von einer momentanen Programmadresse (ad) zu einer nachfolgenden Programmadresse (ad$_{neu}$) eingesetzt wird gemäß der zyklischen Zuordnung für diesen Prozessor (0).

7. Verfahren nach Anspruch 6, bei dem ein Programmsprung eingesetzt wird gemäß

$$\texttt{(ad}_{\texttt{neu}} \texttt{ - 1) mod m = ad mod m}$$

mit m als Wert gleich oder größer der Anzahl der Prozessoren (P).

8. Verfahren nach einem vorstehenden Anspruch, bei dem Speicherzugriffe und/oder Programmsprünge innerhalb eines der Prozessorprogramme (p0 - p3) einem oder mehreren letzten Adressbit einer entsprechenden Programmadresse (ad) des entsprechenden Prozessors (P) unter Berücksichtigung der zyklischen Zuordnung zugeordnet sind.

9. Verfahren nach einem vorstehenden Anspruch, bei dem die Prozessorprogramme (p0 - p3) für die verschiedenen der Prozessoren (1 - 3) hinsichtlich der Zeitpunkte oder Programmadressen (ad) für Speicherzugriffe und/oder Programmsprünge durch eine übergeordnete Instanz oder ein übergeordnetes Verfahren aufeinander abgestimmt bereitgestellt werden.

10. Multi-Prozessor-Architektur, insbesondere Multi-Prozessor-Architektur zum Durchführen eines Verfahrens nach einem vorstehenden Anspruch, mit

   - einer Vielzahl von Prozessoren (P; 0, 1; 0, 1, 2, 3),
   - einem Speicherbereich (MX), auf den diese Prozessoren (P) Zugriff haben, und
   - einer Logik (L), welche zu einem Zeitpunkt (t) immer nur für maximal einen der Prozessoren (P) den Zugriff auf den Speicherbereich (MX) zulässt,
   - wobei die Prozessoren (P) und/oder Programmabläufe (p0, p1; p0 - p3) der Prozessoren (0, 1; 0 - 3) derart ausgestaltet sind, dass für jeden der Prozessoren mittels eines dem jeweiligen Prozessor (0, 1; 0 - 3) individuell zugeordneten Prozessorprogramms (p0, p1; p0 - p3) nur zu für diesen Prozessor zyklisch eindeutig zugeordneten Zeitpunkten (t) und innerhalb des Zyklus zeitlich versetzt zu den anderen Prozessoren der Zugriff auf den Speicherbereich (MX) zugelassen ist
   **dadurch gekennzeichnet, dass** das jeweilige Prozessorprogramm (p0 - p3) für einen entsprechenden der Prozessoren (0 - 3) Speicherzugriffe an zyklisch eindeutig zugeordneten Programmadressen (ad) bereitstellt.

11. Multi-Prozessor-Architektur nach Anspruch 10, bei welcher die Logik (L) durch die Prozessorprogramme (p0, p1; p0 - p3) ausgebildet ist und/oder individuell für die einzelnen der Prozessoren ansteuerbar ist.

12. Multi-Prozessor-Architektur nach Anspruch 10 oder 11, bei welcher die Logik (L) Zeitpunkte für Speicherzugriffe auf den Speicherbereich (MX) und/oder Sprünge innerhalb des jeweiligen Prozessorprogramms zyklisch abhängig von dem oder den letzten Bit einer Programmadresse (ad) des Prozessorprogramms verknüpft.

**Claims**

1. Method for controlling memory accesses by a plurality of processors (P) of a multi-processor architecture to a memory area (MX), in which

   - at a time (t) always at most just one of these processors (P; 0, 1; 0 - 3) is allowed access to the memory area (MX), wherein
   - times (t) for accesses to the memory area (MX) are cyclically uniquely allocated to each of the processors by means of a processor program (p0, p1; p0
   - p3) allocated individually to the respective processor (0, 1; 0 - 3),

   **characterised in that**

   - the respective processor program (p0 - p3) for a corresponding one of the processors (0 - 3) provides memory accesses at cyclically uniquely allocated program addresses (ad).

2. Method according to claim 1, in which the processor program (p0 - p3) for one of the processors (0 - 3) provides memory accesses to the memory area (MX) at cyclically uniquely allocated program addresses (ad) which, compared to the program addresses (ad) for memory accesses of another processor program of another of the processors, are provided with a value (o) offset relative to a cycle duration (m).

3. Method according to claim 2, in which memory accesses of an $o^{th}$ one of the processors (P) take place at times (t) and/or at processor program addresses (ad) as follows

$$\texttt{ad mod m = o \quad or \quad t(ad mod m=0)}$$

   where m as a value is equal to or greater than the number of processors (P) which cyclically uniquely access the memory area (MX).

4. Method according to claim 2, in which the processor programs (p0, p1) of the processors (0, 1) run temporally offset from one another, and memory accesses are inserted within the processor programs (p0, p1) at cyclically identical program addresses (ad) relative to other processor programs (p0) of another processor (0).

5. Method according to one of claims 1 to 3, in which the processor programs (p0, p1) of the processors (0, 1) run temporally simultaneously with one another, and memory accesses are inserted within the processor programs (p0, p1) at cyclically identically program addresses (ad) relative to other processor programs (p0) of another processor (0).

6. Method according to a preceding claim, in which a program jump from a current program address (ad) to a subsequent program address ($ad_{new}$) is inserted in one of the processor programs (p0) at least for one of the processors (0 - 3) according to the cyclic allocation for this processor (0).

7. Method according to claim 6, in which a program jump is inserted as follows

$$\texttt{(ad}_\texttt{new} \texttt{ - 1) mod m = ad mod m}$$

where m as a value is equal to or greater than the number of processors (P).

8. Method according to a preceding claim, in which memory accesses and/or program jumps within one of the processor programs (p0 - p3) are allocated to one or more last address bits of a corresponding program address (ad) of the corresponding processor (P), taking account of the cyclic allocation.

9. Method according to a preceding claim, in which the processor programs (p0 - p3) for the various processors (1 - 3), with regard to the times or program addresses (ad) for memory accesses and/or program jumps, are provided in manner tailored to one another by a higher-level instance or a higher-level process.

10. Multiprocessor architecture, in particular multiprocessor architecture for carrying out a method according to a preceding claim, comprising:

   - a plurality of processors (P; 0, 1; 0, 1, 2, 3),
   - a memory area (MX) to which these processors (P) have access, and
   - logic (L) which at a time (t) always allows at most just one of the processors (P) access to the memory area (MX),
   - wherein the processors (P) and/or program sequences (p0, p1; p0 - p3) of the processors (0, 1; 0 - 3) are configured in such a way that, for each of the processors, access to the memory area (MX) is allowed only at the times (t) cyclically uniquely allocated to this processor and in a manner temporally offset from the other processors within the cycle, by means of a processor program (p0, p1; p0 - p3) allocated individually to the respective processor (0, 1; 0 - 3),

   **characterised in that** the respective processor program (p0 - p3) for a corresponding one of the processors (0 - 3) provides memory accesses at cyclically uniquely allocated program addresses (ad).

11. Multiprocessor architecture according to claim 10, in which the logic (L) is formed by the processor programs (p0, p1; p0 - p3) and/or can be actuated individually for the individual processors.

12. Multiprocessor architecture according to claim 10 or 11, in which the logic (L) links times for memory accesses to the memory area (MX) and/or jumps within the respective processor program in a cyclic manner dependent on the last bit(s) of a program address (ad) of the processor program.


**Revendications**

1. Procédé de commande des accès mémoire d'un ensemble de processeurs (P) dans une architecture multiprocesseurs à une plage de mémoire (MX),
   selon lequel

   - à un instant (t) au maximum l'un seulement de ses processeurs (P; 0, 1; 0 - 3), ne sera autorisé d'accéder à la zone de mémoire (MX), selon lequel
   - à chacun des processeurs, par l'intermédiaire de l'un des programmes de processeur (p0, p1; p0 - p3) associé individuellement au processeur respectif (0, 1; 0 - 3), sont attribués des instants (t) pour des accès cycliques à la zone de mémoire (MX),

   **caractérisé en ce que**

   - le programme de processeur (p0 - p3) respectif, fournit à l'un correspondant des processeurs (0 - 3), des accès mémoire à des adresses de programme (ad) associées de manière univoque et cyclique.

2. Procédé selon la revendication 1,
   selon lequel
   pour l'un des processeurs (0 - 3), le programme de processeur (p0 - p3) prévoit des accès mémoire à la zone de mémoire (MX) à des adresses de programme (ad) attribuées de manière univoque et de façon cyclique, adresses qui sont fournies par rapport aux adresses de programme (ad) pour les accès mémoire d'un autre programme de processeur d'un autre des processeurs en étant décalées d'une valeur (o) décalée par rapport à une durée cyclique (m).

3.  Procédé selon la revendication 2,
    selon lequel
    les accès mémoire d'un des processeurs (P) d'ordre (o) se font à des instants (t) et/ou à des adresses de programme
    dans des programmes de processeurs (ad) selon les relations suivantes :

$$\text{ad mod m} = \text{o} \qquad \text{ou} \qquad t \, (\text{ad mod m=0})$$

relations dans lesquelles (m) est une valeur égale ou supérieure au nombre de processeurs (P) qui accèdent
cycliquement de manière univoque à la zone de mémoire (MX).

4.  Procédé selon la revendication 2,
    selon lequel
    les programmes de processeurs (p0 - p1) des processeurs (0, 1) sont décalés dans le temps les uns par rapport
    aux autres et les accès mémoire dans les programmes de processeur (p0, p1), sont placés aux adresses de
    programme (ad) cycliquement analogues d'un autre processeur (o) par rapport aux autres programmes de processeur (p0).

5.  Procédé selon l'une des revendications 1 à 3,
    selon lequel
    les programmes de processeur (p0, p1) des processeurs (0, 1) se déroulent simultanément dans le temps et les
    accès mémoire dans les programmes de processeur (p0, p1) sont appliqués à des adresses de programme (ad)
    cycliquement identiques d'un autre processeur (o) par rapport aux autres programmes de processeur (p0).

6.  Procédé selon l'une des revendications précédentes,
    selon lequel
    dans l'un des programmes de processeur (p0), au moins pour l'un des processeurs (0 - 3), on a un saut de programme
    d'une adresse de programme (ad), instantanée à une adresse de programme (ad$_{neu}$) suivante, selon l'association
    cyclique de ce processeur (O).

7.  Procédé selon la revendication 6,
    selon lequel
    on applique un saut de programme selon la règle

$$(\text{ad}_{neu} - 1) \bmod m = \text{ad} \bmod m$$

dans laquelle (m) est une valeur égale ou supérieure au nombre des processeurs (P).

8.  Procédé selon l'une des revendications précédentes,
    selon lequel
    les accès mémoire et/ou les sauts de programme à l'intérieur de l'un des programmes de processeur (p0 - p3) sont
    associés à un ou plusieurs des derniers bits d'adresse d'une adresse de programme (ad) correspondante du processeur (P) correspondant en tenant compte de l'association cyclique.

9.  Procédé selon l'une des revendications précédentes,
    selon lequel
    les programmes de processeur (p0 - p3) pour les différents processeurs (1 - 3), sont fournis du point de vue des
    instants ou des adresses de programme (ad) pour les accès mémoire et/ou les sauts de programme par une instance
    supérieure ou par un procédé supérieur pour être accordés.

10. Architecture multiprocesseurs, notamment architecture multiprocesseurs pour la mise en oeuvre d'un procédé selon
    l'une des revendications précédentes, comprenant :

    - un ensemble de processeurs (P; 0, 1; 0, 1, 2, 3),

- une zone de mémoire (MX) à laquelle accèdent ces processeurs (P), et
- une logique (L) qui autorise à un instant (t) toujours seulement au maximum à l'un des processeurs (P), l'accès à la zone de mémoire (MX),
dans lequel

- les processeurs (P) et/ou les déroulements de programme (p0, p1; p0 - p3) des processeurs (0, 1; 0 - 3) sont conçus pour chacun des processeurs à l'aide d'un processeur respectif (0, 1; 0 - 3), les programmes de processeur (p0, p1; p0 - p3) associés individuellement, ne sont autorisés que pour ce processeur, à des instants attribués de manière univoque et cyclique (t) et en étant décalés dans le temps dans le cycle par rapport aux autres processeurs pour l'accès à la zone de mémoire (MX),

**caractérisée en ce que**
le programme de processeur respectif (p0 - p3) pour l'un des processeurs (0 - 3) correspondant, fournit les accès mémoire à des adresses de programme (ad) associées de manière univoque et cycliquement.

11. Architecture multiprocesseurs selon la revendication 10,
dans laquelle
la logique (L) est développée par les programmes de processeur (p0, p1; p0 - p3) et/ou se commande individuellement pour les différents processeurs.

12. Architecture multiprocesseurs selon la revendication 10 ou 11,
dans laquelle
la logique (L) combine les instants des accès mémoire à la zone de mémoire (MX) et/ou les sauts à l'intérieur du programme de processeur respectif, de manière cyclique en fonction du ou des derniers bits d'une adresse de programme (ad) du programme de processeur.

Fig. 1

$(ad_{neu}-1) \bmod 2 \overset{!}{=} ad \bmod 2$

**M** — M0, MX, M1

falls mod 2 = 1
falls mod 2 = 0

$(ad_{neu}-1) \bmod 2 \overset{!}{=} ad \bmod 2$

| ad | p0 für 0 — i |
|----|------|
| 0 | · · · |
| 1 | · · · |
| 2 | lade aus MX |
| 3 | if ... zu 8 |
| 4 | · · · |
| 5 | leer |
| 6 | speicher in MX |
| 7 | zu 10 |
| 8 | · · · |
| 9 | · · · |
| 10 | · · · |
| 11 | · · · |
| 12 | zu 1 |

| ad | p1 für 1 — i |
|----|------|
| 0 | · · · |
| 1 | · · · |
| 2 | if ... zu 5 |
| 3 | if ... zu 6 |
| 4 | · · · |
| 5 | · · · |
| 6 | · · · |
| 7 | · · · |
| 8 | · · · |
| 9 | speicher in MX |
| 10 | · · · |
| 11 | · · · |
| 12 | · · · |

Fig. 2

$(ad_{neu}-1) \bmod 2 \overset{!}{=} ad \bmod 2$

**M** — M0, MX, M1

falls ad(P) mod 2 = 0

$(ad_{neu}-1) \bmod 2 \overset{!}{=} ad \bmod 2$

| ad | p0 für 0 — i |
|----|------|
| 0 | · · · |
| 1 | · · · |
| 2 | lade aus MX |
| 3 | if ... zu 8 |
| 4 | · · · |
| 5 | leer |
| 6 | speicher in MX |
| 7 | zu 10 |
| 8 | · · · |
| 9 | · · · |
| 10 | · · · |
| 11 | · · · |
| 12 | zu 1 |

| ad | p1 für 1 — i |
|----|------|
| 0 | · · · |
| 1 | |
| 2 | if ... zu 5 |
| 3 | if ... zu 6 |
| 4 | · · · |
| 5 | · · · |
| 6 | · · · |
| 7 | · · · |
| 8 | speicher in MX |
| 9 | · · · |
| 10 | · · · |
| 11 | · · · |

M

| M0 | M1 | MX | M2 | M3 |

L

| 0 | P | 1 | P | 2 | P | 3 | P |

P: 0, 1, ..., o, ... (m-1) Speicherzugriff,
falls ad mod m = o

Sprünge jeweils zu $(ad_{neu}-1)$ mod m $\overset{!}{=}$ ad mod m
Speicherzugriff, falls ad mod m = o

L

| p0 für 0 | | p1 für 1 | | p2 für 2 | | p3 für 3 | |
|---|---|---|---|---|---|---|---|
| ad | i | ad | i | ad | i | ad | i |
| 0 | lade aus MX | 0 | • • • | 0 | • • • | 0 | • • • |
| 1 | • • • | 1 | • • • | 1 | • • • | 1 | • • • |
| 2 | • • • | 2 | if ... zu 7 | 2 | • • • | 2 | • • • |
| 3 | if ... zu 8 | 3 | • • • | 3 | • • • | 3 | Zugriff MX |
| 4 | • • • | 4 | • • • | 4 | • • • | 4 | • • • |
| 5 | • • • | 5 | • • • | 5 | • • • | 5 | • • • |
| 6 | • • • | 6 | • • • | 6 | Zugriff MX | 6 | • • • |
| 7 | leer | 7 | • • • | 7 | • • • | 7 | • • • |
| 8 | speicher in MX | 8 | • • • | 8 | • • • | 8 | • • • |
| 9 | • • • | 9 | Zugriff MX | 9 | • • • | 9 | • • • |
| 10 | • • • | 10 | • • • | 10 | • • • | 10 | • • • |
| 11 | • • • | 11 | • • • | 11 | • • • | 11 | • • • |
| 12 | zu 1 | 12 | • • • | 12 | • • • | 12 | • • • |

t0, t

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0249720 A